# NEUE EUROPÄISCHE PATENTSCHRIFT

(11) **EP 1 935 789 B2**
(45) Veröffentlichungstag und Bekanntmachung des Hinweises auf die Entscheidung über den Einspruch: **29.06.2016**
(45) Hinweis auf die Patenterteilung: 07.10.2009
(21) Anmeldenummer: 07021861.5
(22) Anmeldetag: 10.11.2007
(51) Int. Cl.: B65B 31/02, B65D 81/20

(54) **Verfahren und Anlage zum gasdichten Verpacken von Gegenständen**
Method and apparatus for gas-tight packaging of articles.
Procédé et installation pour emballer des objets d'une façon étanche au gaz

(30) Priorität: 22.12.2006 DE 102006061309
(43) Veröffentlichungstag der Anmeldung: 25.06.2008
(73) Patentinhaber: Jörg von Seggern Maschinenbau GmbH, 26133 Oldenburg (DE)
(72) Erfinder: Seggern, Jörg von, 26133 Oldenburg (DE)
(74) Vertreter: Jabbusch, Matthias

(56) Entgegenhaltungen:
- EP-A- 0 899 209
- WO-A-87/02965
- WO-A-88/01592
- WO-A1-85/00339
- WO-A1-87/02965
- DE-A1- 10 237 933
- FR-A- 2 565 552
- FR-A- 2 725 692

## Beschreibung

Die Erfindung betrifft ein Verfahren zum gasdichten Verpacken von Gegenstän mit sich eng an die Gegenstände anlegender Folie unter Einsatz eines Vakuums, wobei die Gegenstände in eine Schale eingelegt werden und zum Verschließen der Schale die tiefziehbare Folie mit der Schale verbunden wird, und wobei für das Ausbilden der Verpackung eine Schale mit zumindest einem umlaufenden Rand verwendet wird, die tiefziehbare Folie auf ein Maß des umlaufenden Randes zugeschnitten wird und anschließend auf den umlaufenden Rand gasdicht aufgebracht wird, während eine weitere Folie nach ihrem Aufbringen etwa in der Ebene des umlaufenden Randes verbleibt.

Die Erfindung betrifft des weiteren ein Anlage zum gasdichten Verpacken von Gegenständen mit sich eng an die Gegenstände anlegendem Folienmaterial unter Einsatz eines Vakuums, zum Durchführen des vorgenannten Verfahrens, umfassend eine Auflage für zumindest eine Schale und umfassend zumindest ein Siegelwerkzeug für die tiefziehbare Folie und umfassend zumindest eine Schneideinrichtung für die tiefziehbare Folie.

Verfahren und Vorrichtungen der vorgenannten Gattungen werden dazu eingesetzt, Gegenstände zu verpacken. Bei diesen Gegenständen kann es sich um anorganische Produkte handeln, wie beispielsweise Werkzeuge oder Schreibwaren, welche in entsprechenden Verpackungen in Märkten zum Verkauffeil gehalten werden. Insbesondere dann, wenn ein Vakuum zum Tiefziehen der Folie, die mit der Schale verschweißt wird, eingesetzt wird, kann es sich bei den Gegenständen um organische Produkte, wie Lebensmittel handeln. Insbesondere Fleisch- und Wurstwaren werden mit dieser Art Verpackungen eingepackt, um im Innenraum der Verpackung ein möglichst geringes Gasvolumen zu belassen. Bei bekannten Verfahren wird so vorgegangen, dass ein Gegenstand in eine Schale eingelegt wird und anschließend die tiefziehbare Folie mit der Schale verschweißt wird.

Dabei wird nach der nicht zum Stand der Technik gehörenden DE 10 2005 035 476.9 bereits so vorgegangen, dass für das Ausbilden der Verpackung eine Schale mit einem umlaufenden Rand verwendet wird, dass die tiefziehbare Folie auf ein Maß des umlaufenden Randes zugeschnitten wird und dass anschließend oder gleichzeitig die tiefziehbare Folie auf den umlaufenden Rand gasdicht aufgebracht wird. Der umlaufende Rand wird dadurch bei einem Verpacken eines Gegenstandes nicht beschädigt, so dass dieser Rand von vorneherein mit einer gefälligen und griffsympathischen Abkantung oder anderer Ausgestaltung versehen sein kann. Der umlaufende Rand der Schale wird erfindungsgemäß dadurch geschont, dass vor dem Aufbringen der tiefziehbaren Folie auf den umlaufenden Rand dieselbe zugeschnitten wird. Allerdings wird durch das enge Anlegen der tiefziehbaren Folie an dem zu verpackenden Gut eine unregelmäßige Oberfläche der Oberseite der Verpakkung ausgebildet. Diese unregelmäßige obere Oberfläche der Verpackung hat den Nachteil, dass aufgedruckte Hinweise und Darstellungen nicht mehr klar zu erkennen sind. Zudem lassen sich derart unregelmäßig ausgebildete Verpackungen schlechter stapeln als regelmäßig ausgebildete Verpackungen.

In der WO 88/01592 ist das Anbringen zweier Folien gezeigt, jedoch erstreckt sich die obere Folie, die in der Ebene des umlaufenden Randes verbleibt, bis zu den äußeren Abschnitten der Ränder der Schale. Die obere Folie begrenzt einen Bauraum, in dem ein Gas angeordnet sein kann, welches die Haltbarkeitseigenschaften der verpackten Waren verbessert. Wie der Dekkel verarbeit wird, ist in dieser Druckschrift nicht gezeigt. Es ist lediglich angedeutet, dass der Deckel vollständig um den Umfang der Basis herumgeschweißt wird.

Der Erfindung liegt die Aufgabe zugrunde, ein Verfahren aufzuzeigen, mit dem es ermöglicht ist, Gegenstände in ansehnlich ausgestaltete gasdichte Verpackungen zu verpacken, diese dabei stapelbar auszubilden und auf herkömmliche Art und Weise zu etikettieren. Weiterhin sollen eine Anlage, mit der ein derartiges Verpacken möglich ist, und eine Verpackung aufgezeigt werden.

Diese Aufgabe ist verfahrensseitig erfindungsgemäß dadurch gelöst, dass während des Aufbringens der tiefziehbaren Folie oder nach diesem Aufbringen die weitere Folie auf das Maß des umlaufenden Randes zugeschnitten wird und anschließend auf den umlaufenden Rand aufgebracht wird.

Nach dem erfindungsgemäßen Verfahren sind wenigstens zwei Folien vorgesehen. Während sich die erste Folie, welche tiefziehbar ist, eng an das zu verpakkende Gut anlegen kann, wird eine zweite Folie in der Ebene des umlaufenden Randes angeordnet. Wie bei der DE 10 2005 035 476.9 wird dabei so vorgegangen, dass die weitere Folie zunächst auf das Maß des umlaufenden Randes zugeschnitten wird und anschließend auf den umlaufenden Rand aufgebracht wird. Dadurch wird ein oberer regelmäßiger Abschluss der Verpackung ausgebildet. Die Verpackung ist beispielsweise regelmäßig quaderförmig ausgebildet, sie ist dadurch stapelbar. Auf die weitere Folie können zudem Informationen über Inhalt und Preis oder ähnliches aufgedruckt oder auf andere Weise aufgebracht werden, diese sind aufgrund des Verbleibens dieser Folie in einer etwa horizontalen Ebene gut lesbar.

Bei dem erfindungsgemäßen Verfahren wird die Bearbeitung somit gegenüberdem Stand derTechnik ergänzt. Es wird eine weitere Folie zugeschnitten, anschließend wird sie aufgebracht. Dies hat zum einen den Vorteil, dass das Schneiden der Folie in deren kaltem Zustand vorgenommen wird. In diesem Zustand ist die Folie ausgehärtet, so dass ihr saubere Schnittkanten zugefügt werden können. Das Entstehen von Wellen und Verwerfungen ist vorteilhaft verhindert. Zum anderen wird ein Schneiden der Folie nach dem Schweißen und somit in ihrem erwärmten Zustand vermieden. Auch die umlaufenden Ränder der Schale werden nicht geschnitten, da das Schneiden der Folie in ihrem kalten Zustand in einer Weise erfolgen kann, in der dafür vorgesehene Schneidwerkzeuge nicht mit der Schale in Kontakt geraten. Eine Randgestaltung der Schale bleibt somit erhalten, scharfe Schnittkanten treten vorteilhaft nicht auf.

Nach einer ersten Weiterbildung des erfindungsgemäßen Verfahrens ist vorgesehen, daß die weitere Folie auf den umlaufenden Rand aufgeschweißt wird. Durch das Schweißen wird einerseits eine feste und gasdichte Verbindung zwischen Folie und Schale hergestellt. Es kann aber auch vorgesehen sein, daß die weitere Folie im Bereich des umlaufenden Randes auf die tiefziehbare Folie aufgeschweißt wird. Beide Folien liegen dann im räumlichen Bereich des umlaufenden Randes übereinander. Die Anlage der einzelnen Folie und des umlaufenden Randes wird durch ein Verschweißen hergestellt, dadurch ist eine mediumdichte Verbindung der Folien und des Randes gegeben. Die Erstreckung jeder Folie ist dabei vorzugsweise etwas geringer als die vom äußeren umlaufenden Rand aufgespannte Fläche.

Nach einer nächsten Weiterbildung des erfindungsgemäßen Verfahrens ist vorgesehen, daß in den zwischen der tiefziehbaren Folie und der weiteren Folie auszubildenden Zwischenraum ein Schutzgas eingeführt wird. Zwischen beiden Folien ist ein Abstand ausgebildet, der von den Schalenwänden eingefaßt ist. Es ist ein Zwischenraum ausgebildet, der für die Aufnahme von Produkten genutzt werden kann. So sind beispielsweise bei einem Fleischprodukt als Gegenstand Gewürze in den Zwischenraum eingebbar. Es können auch andere feste oder flüssige Produkte in diesem Zwischenraum aufgenommen werden, da beide Folien mit dem Rand der Schale gas- und flüssigkeitsdicht aufgebracht sind.

Das Einführen eines Schutzgases in diesen Zwischenraum kann verschiedene vorteilhafte Wirkungen haben. Ist dieses Schutzgasz.B. Stickstoff oderKohlendioxid, so verbessert es die Haltbarkeit der im Zwischenraum aufgenommenen Produkte. Das Schutzgas kann aber auch Sauerstoff sein, was bei einer Verpakkung von Fleischprodukten vorteilhaft für das Aussehen des Fleischproduktes ist.

Um die weitere Folie nicht zu beschädigen oder zu dehnen, sieht eine Weiterbildung der Erfindung vor, daß in dem Zwischenraum und im Umgebungsbereich der Schale ein Normaldruck angeordnet ist. In dem Zwischenraum herrschen somit normale Druckverhältnisse. Die weitere Folie wird von diesen Druckverhältnissen nicht angegriffen, so daß sie in der Ebene des umlaufenden Randes verbleibt. Auch bei Einführen eines Schutzgases werden diese Druckverhältnisse eingehalten.

Zur vorrichtungsseitigen Lösung der Aufgabe sieht die Erfindung vor, daß die Anlage zumindest ein zweites Siegelwerkzeug für die weitere Folie und zumindest eine zweite Schneideinrichtung fürdie weitere Folie aufweist.

Nach dem erfindungsgemäßen Verfahren ist vorgesehen, die weitere Folie zunächst zuzuschneiden und anschließend auf die Schale aufzubringen. Aufgrund dieser Verfahrensweise ist nicht länger eine separate Schneidstation für die Folie erforderlich. Sie kann erfindungsgemäß der Anlage zugeordnet sein, da das Schneiden der Folie im Vorfeld oder gleichzeitig mit dem Versiegeln bzw. Verschweißen der Folie erfolgt.

Die Schneideinrichtung umfaßt vorzugsweise Messerklingen, mit denen ein Schneiden der weiteren Folie erfolgreich durchführbar ist.

Nach einer nächsten Weiterbildung der erfindungsgemäßen Anlage ist vorgesehen, daß die Schneideinrichtung dem Siegelwerkzeug räumlich zugeordnet ist. Durch diese räumliche Zuordnung kann ein zeitgleiches Zuschneiden und Versiegeln erfolgen, auch ein zeitlich kurz aufeinander folgendes Schneiden und Versiegeln ist möglich. Die Zuordnung von Schneideinrichtung und Siegelwerkzeug zueinander ist räumlich gegeben, konstruktiv sind beide Baugruppen voneinander unabhängig, um ein separates Durchführen der Arbeitsgänge Zuschneiden und Versiegeln zu ermöglichen.

Die Schneideinrichtung kann das Siegelwerkzeug umlaufen. Ist das Siegelwerkzeug beispielsweise rechteckig ausgebildet, so können Messerklingen der Schneideinrichtung dieses Siegelwerkzeug wie einen Rahmen umlaufen. Vor dem Aufsetzen des Siegelwerkzeuges auf die Folie erfolgt mit den rahmenartig ausgebildeten Messerklingen ein Zuschneiden derselben.

Zur konstruktiven Ausbildung der Anlage sieht eine Weiterbildung der Erfindung vor, daß die Auflage für die Schale und/oder das Siegelwerkzeug höhenveränderbar geführt sind. Auflage und Siegelwerkzeug können somit einander angenähert und voneinander entfernt werden. Die Annäherung wird dazu genutzt, das Siegelwerkzeug auf die weitere Folie aufzulegen, wenn diese auf dem umlaufenden Rand der Schale zur Auflage gebracht ist.

Eine nächste Weiterbildung der Erfindung sieht vor, daß die Auflage zumindest eine Auflageeinrichtung für den umlaufenden Rand der Schale aufweist. Die Schale ist mit Hilfe der Auflage in die Auflageeinrichtung für den umlaufenden Rand einbringbar. Der umlaufende Rand wird vorzugsweise auf diese Auflageeinrichtung aufgelegt, damit er für das Verschweißen bzw. Versiegeln mit der weiteren Folie bereitliegt. Die Auflageeinrichtung unterstützt den umlaufenden Rand und bildet ein Gegenlager für das auf den Rand aufzulegende Siegelwerkzeug aus.

Nach einer nächsten Weiterbildung der erfindungsgemäßen Vorrichtung ist vorgesehen, daß zwischen den Schalen und der weiteren Folie eine Distanzplatte angeordnet ist, welche auf die Auflageeinrichtung für den umlaufenden Rand auflegbar ist, wobei dabei der umlaufende Rand zumindest abschnittsweise frei bleibt. Diese erfindungsgemäß vorgesehene Distanzplatte unterstützt das vorherige Zuschneiden der Folie vor ihrem Aufschweißen bzw. Versiegeln auf den umlaufenden Rand der Schale. Dazu ist die Distanzplatte auf die in der Auflageeinrichtung aufgenommenen umlaufenden Ränder der Schale auflegbar. Die Distanzplatte bildet nun mit ihrer oben liegenden Oberfläche eine Ebene aus, die oberhalb des umlaufenden Randes angeordnet ist. Auf diese Ebene kann die Folie aufgelegt werden und in dieser Ebene kann an die weitere Folie die Schneideinrichtung angesetzt werden. Ist das Zuschneiden der Folie erfolgt, fällt diese durch die Distanzplatte hindurch und legt sich auf die umlaufenden Ränder auf. Diese umlaufenden Ränder werden von der Distanzplatte freigehalten.

Bei dem Einsatz dieser Distanzplatte mit den Durchbrüchen ist es vorteilhaft, dem Siegelwerkzeug die Schneideinrichtung räumlich zuzuordnen. Bei einem Heranführen des Siegelwerkzeuges an die weitere Folie kann zugleich ein Zuführen der Schneideinrichtung erfolgen. Die Schneideinrichtung ist dabei vorzugsweise eng an einer Kante des Durchbruches der Distanzplatte vorbeiführbar, so daß sich zwischen einer Messerklinge der Schneideinrichtung und dieser Kante des Durchbruches ein Schereneffekt ergibt, mit dem die kalte Folie unter Herstellen einer sauberen Schnittkante durchtrennt wird. Das Schneidwerkzeug ist dabei vorzugsweise vom Siegelwerkzeug abgekoppelt und federnd gelagert. Durch diese Abkopplung ist es ermöglicht, das Siegelwerkzeug nachfolgend näher an die Schale heranzuführen als das Schneidwerkzeug. Nach dieser Heranführung des Siegelwerkzeuges kann eine Versiegelung zwischen Folie und Schale erfolgen, während das Schneidwerkzeug in einer von der Schale entfernten Position verharrt, um den umlaufenden Rand der Schale nicht zu beschädigen.

Selbständiger Schutz wird auch beansprucht für eine Verpackung, die nach dem erfindungsgemäßen Verfahren hergestellt wird. Diese Verpackung zeichnet sich erfindungsgemäß dadurch aus, daß die weitere Folie nach ihrem Auflegen auf zumindest einen umlaufenden Rand der Schale diesen Rand und/oder die tiefziehbare Folie abschnittsweise abdeckt.

Erfindungsgemäß ist somit vorgesehen, daß die auf den umlaufenden Rand aufgelegte Folie diesen Rand nicht vollständig abdeckt. Die Folie kann jeweils zum äußeren Rand des umlaufenden Randes einen Rücksprung aufweisen, sodaßsie mit diesem Rand nicht in Kontakt gerät. Sie kann vielmehr auf einen Bereich des umlaufenden Randes oder der bereits auf den umlaufenden Rand aufgeschweißten tiefziehbaren Folie aufgeschweißt sein, der von der Außenkante des umlaufenden Randes noch einen Abstand hat. Dadurch wird eine saubere Schweißnaht hergestellt.

Ein umlaufender Rand der Schale ist dabei immer der Bereich der Schalenoberfläche, welcher zumindest eine Vertiefung in der Schale umlaufend umschließt. Die Schale kann eine Vertiefung aufweisen, die von einem umlaufenden Rand umgeben ist. Dabei ist es auch möglich, daß in einer Gesamtverpackung mehrere Vertiefungen angeordnet sind, beispielsweise bei mehreren zusammengesetzten Yoghurtbechern. Jeder dieser Vertiefungen kann dabei eine separate weitere Folie zugeordnet sein, welche lediglich mit dem umlaufenden Rand, der diese Vertiefung umgibt, verbunden wird. Es erfolgt somit kein Gesamtabdecken der verschiedenen Vertiefungen mit einerweiteren Folie, sondern es werden mehrere Folien vorgesehen. Diese Verpackung weist zwischen den einzelnen Vertiefungen Bereiche auf, die nicht von einer Folie belegt sind. In diesen Bereichen können dann bevorzugt Perforationen angebracht werden, um das Vereinzelndereinzelnen Verpackungsbereiche voneinander zu erleichtem. In diesem Fall können Abzugslaschen der weiteren wie der tiefziehbaren Folie auch von einer Anordnung im Außenbereich der Gesamtverpackung in einen I nnenbereich verlegt werden, beispielsweise dahin, wo die Folien mehrerer Vertiefungen einander angenähert sind.

Ein Ausführungsbeispiel der erfindungsgemäßen Vorrichtung, aus dem weitere erfinderische Merkmale hervorgehen, ist in der Zeichnung dargestellt. Es zeigen:
- Fig. 1:: eine Schnittansicht zweier Vorrichtungen zum gasdichten Verpacken von Gegenständen mit sich eng an die Gegenständen anlegendem Folienmaterial;
- Fig. 2 bis 7:: Schnittansichten der in Fig. 1 rechts dargestellten Anlage zum gasdichten Verpacken von Gegenständen in verschiedenen Bearbeitungssituationen während eines Verpackungsvorganges und
- Fig. 8:: eine maßstäblich vergrößerte Darstellung der Einzelheit V in Fig. 7.

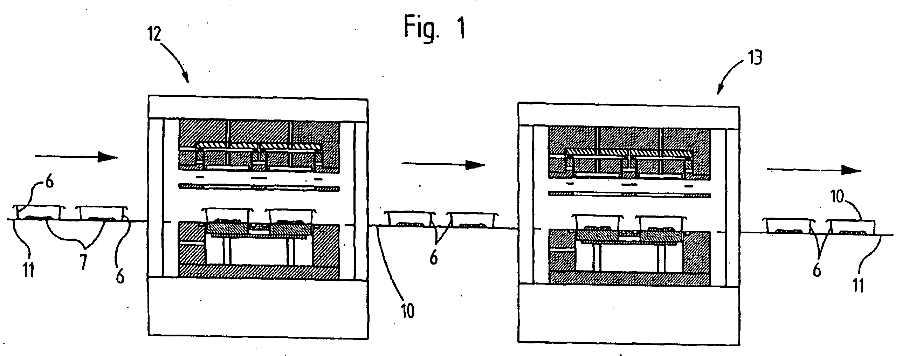

In Fig. 1 sind zwei in einer Verarbeitungsfolge aufeinanderfolgende Vorrichtungen zum Verpacken von Gegenständen 7 gezeigt. Die zu verpackenden Gegenstände 7 liegen in Schalen 6, welche auf Förderbändern 11 aufstehen. In der ersten Vorrichtung 12 wird an die Gegenstände 7 eine tiefziehbare Folie 4 eng angelegt. Das Verfahren und die Vorrichtung für diesen Prozeß sind in der DE 10 2005 035 476.9 beschrieben.

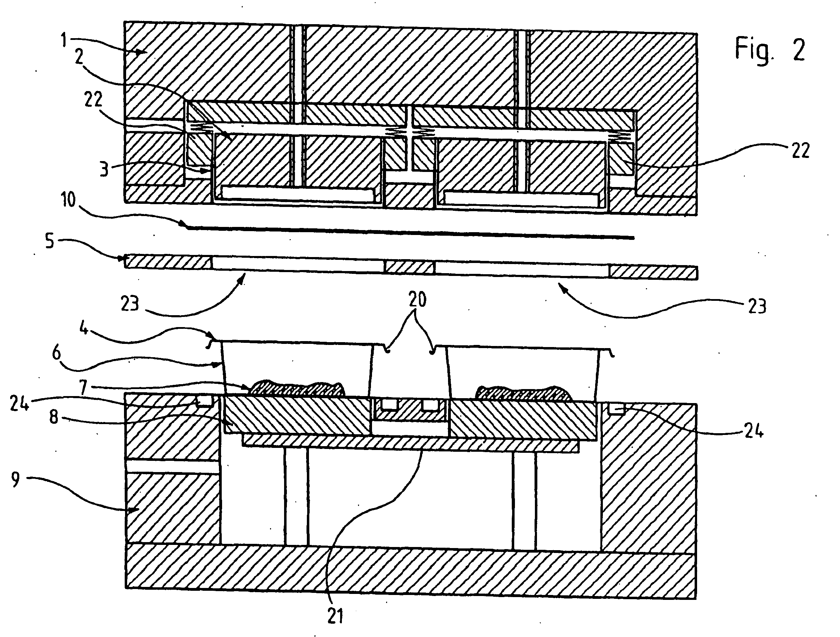

Erfindungsgemäß ist eine zusätzliche Anlage 13 vorgesehen, in der die Schalen 6 mit einer weiteren Folie 10 ausgestattet werden. Diese Anlage 13 ist in den nachfolgenden Figuren 2 bis 7 näher beschrieben.

Die Anlage in den Figuren weist ein Unterwerkzeug 9 und ein Oberwerkzeug 1 auf. Das Unterwerkzeug 9 umfaßt zwei Auflagetische 8 für zwei Schalen 6. Jede der Schalen 6 hat einen umlaufenden Rand 2. Die Auflagetische 8 sind auf ein Gestell 12 aufgestellt, das höhenveränderbar ist.

In dem Oberwerkzeug 1 sind zwei Siegelwerkzeuge 2 aufgenommen. Das Oberwerkzeug 1 ist dabei insgesamt höhenveränderbar geführt.

Den Siegelwerkzeugen 2 räumlich zugeordnet sind Schneideinrichtungen 3, welche als die Siegelwerkzeuge 2 umlaufende Messer ausgebildet sind. Die Schneideinrichtungen 3 sind in federnd gelagerten Messerhaltern 22 aufgenommen.

In den Figuren 2 bis 7 ist auf die Gegenstände 7 bereits eine tiefziehbare Folie 4 aufgebracht worden. Figur 2 zeigt des weiteren eine weitere Folie 10. Diese Folie 10 liegt vor ihrem Aufsiegeln auf die umlaufenden Ränder 20 der Schalen 6 einstückig vor.

Die Vorrichtung weist noch zwischen der weiteren Folie 10 und den Schalen 6 eine Distanzplatte 5 auf. Diese Distanzplatte 5 hat Durchbrüche 23, welche mit den Schalen 6 korrespondieren.

Im Bereich des Unterwerkzeuges 9 ist den Auflagetischen 8 noch eine Auflageeinrichtung zugeordnet. Diese Auflageeinrichtung wird durch die obersten Abschnitte des Unterwerkzeuges 9 ausgebildet. Im Bereich dieser Auflageeinrichtung sind in die Oberfläche des Unterwerkzeuges 9 Vertiefungen 24 eingelassen, in welche die umlaufenden Ränder 20 der Schalen 6 vorstehen können.

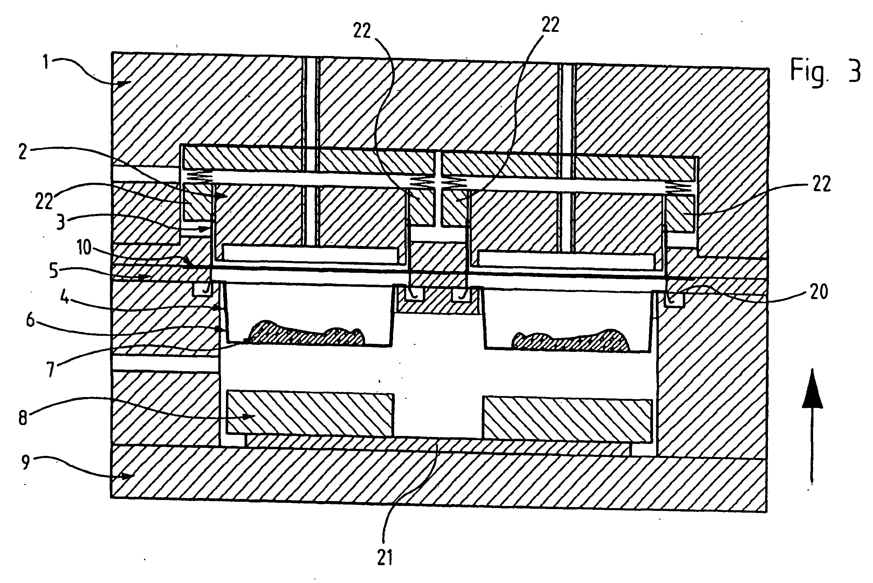

Figur 3 zeigt den Zustand nach Anheben des Unterwerkzeuges 9. Die Schalen 6 sind auf die Auflageeinrichtung des Unterwerkzeuges 9 aufgelegt. Ihre umlaufenden Ränder 20 werden durch das Unterwerkzeug 9 unterstützt.

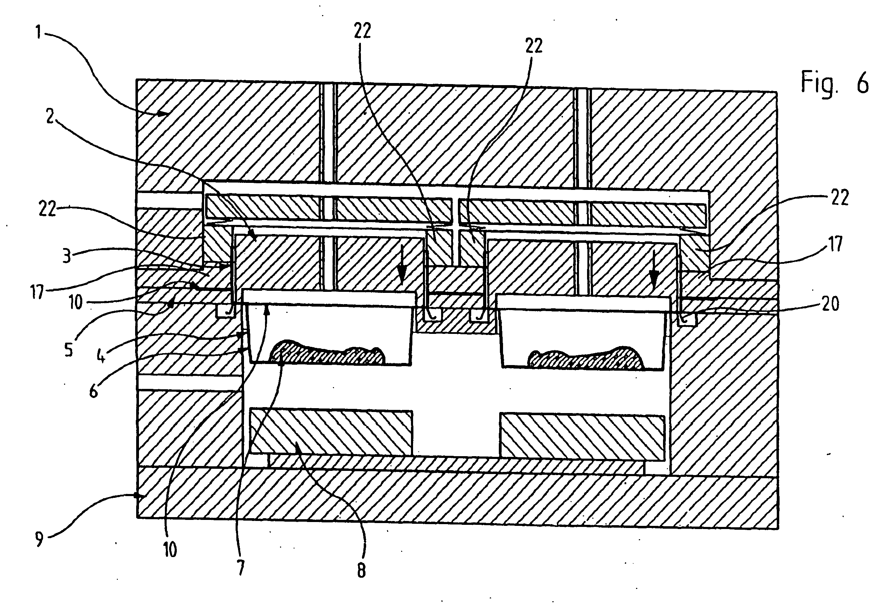

Die Distanzplatte 5 ist auf das Unterwerkzeug 9 aufgelegt. Auf der Distanzplatte 5 liegt die weitere Folie 10 auf, das Oberwerkzeug 1 mit den Siegelwerkzeugen 2 und den Schneideinrichtungen 3 ist der Folie 10 angenähert. Die Schneideinrichtungen 3 sitzen bereits auf der Folie 10 nahezu auf, sie werden an zugeordneten Kanten der Distanzplatte 5 eng entlang geführt, wenn sie sich den Schalen 6 weiter annähern, wie in Figur 6 gezeigt.

In Figur 6 sind die Schneideinrichtungen 3 nicht bis an die umlaufenden Ränder 20 der Schalen 6 herangeführt. Die Halterungen 22 der Schneideinrichtungen 3 liegen in ihrer tiefsten Position auf Anschlägen 17 auf. Mit diesen Anschlägen 17 werden die Schneideinrichtungen 3 in einem Abstand zu den umlaufenden Rändern 20 gehalten. Diese Ränder 20 werden daher von den Schneideinrichtungen 3 nicht durchgeschnitten, da die Schneideinrichtungen 3 in ihren Haltungen 22 federnd zurückweichen können. Mit Hilfe der Siegelwerkzeugen 2 werden die abgeschnittenen Bereiche der weiteren Folie 10 anschließend auf die umlaufenden Ränder 20 aufgeschweißt.

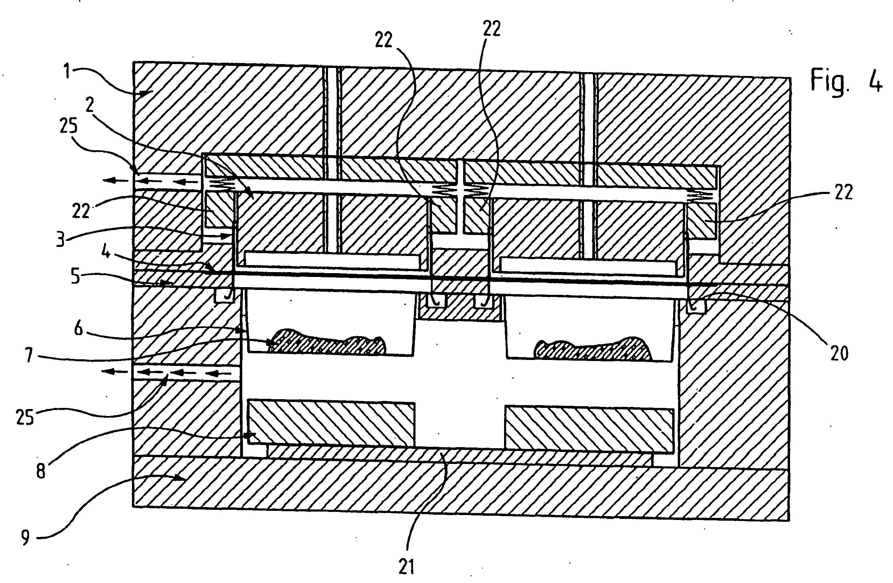

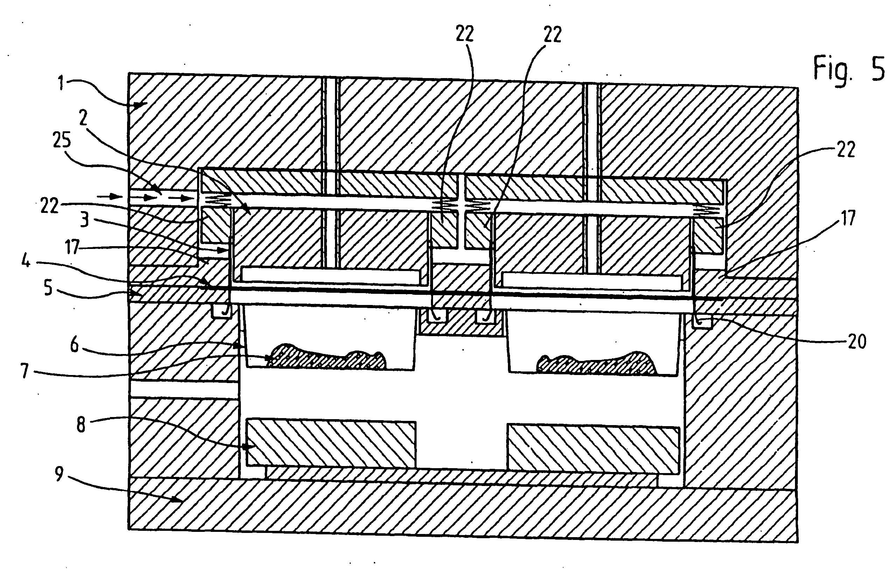

In den Figuren 4 und 5 ist gezeigt, daß in der Umgebung der Schale 6 eine Schutzatmosphäre erzeugt werden kann, welche zu einer Schutzgasbefüllung der Schalen 6 führt. Entsprechend den in Fig. 4 gezeigten Pfeilen ist über Kanäle 25 die Umgebungsatmosphäre aus dem Bereich der Schalen 6 entfembar. Über den im Oberwerkzeug 1 angeordneten Kanal 25 ist anschließend, wie in Figur 5 gezeigt, entlang der Pfeile ein Schutzgas in den Bereich oberhalb der Schalen 6 einführbar. Dieses Schutzgas, beispielsweise Stickstoff oder Kohlendioxid, gelangt bis in die Schalen 6. Beim Aufsiegeln der weiteren Folie 10 auf die Schalen 6 nach Fig. 6 ist das Schutzgas in dem Zwischenraum zwischen beiden Folien 4 und 10 angeordnet.

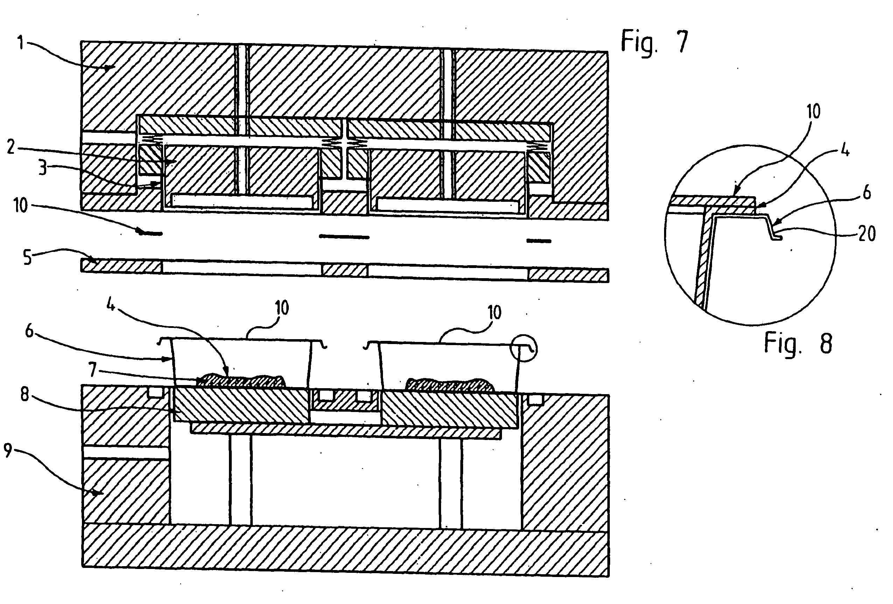

Figur 7 zeigt den Zustand der Vorrichtung nach dem Entformen der Schalen 6. Oberwerkzeug 1 und Unterwerkzeug 9 sind voneinander wieder entfernt, die Distanzplatte 5 ist von den Schalen 6 abgehoben. Von der weiteren Folie 10 verbleiben Schnittreste, welche entsorgt werden. Die Schalen 6 können nach diesem Siegelvorgang von dem Unterwerkzeug 9 entfernt werden, dieses kann anschließend neue Schalen 6 aufnehmen. Die Vorrichtung kann dabei taktweise arbeiten, beispielsweise mit 6 Takten pro Minute.

Bei der erfindungsgemäßen Vorrichtung kann es sich um eine Siegelvorrichtung handeln, mit der auch Schalen mit weiteren Folien 10 verschlossen werden können, die nicht in der ersten Vorrichtung 12 im "Skin"-Verfahren tiefgezogen werden. Ein und dieselbe Vorrichtung kann somit für voneinander verschiedene Verpakkungsarten eingesetzt werden, bei denen gleiche genormte Grundverpackungen, wie die Schalen 6, eingesetzt werden.

Das Zuschneiden der weiteren Folie 10 sowie das Verschweißen dieser Folie 10 auf den umlaufenden Rändern 20 erfolgt vorzugsweise in ein und demselben Takt, um die Bearbeitungszeit zu verkürzen.
Die Schneideinrichtungen 3 werden nicht durch die Ebene der umlaufenden Ränder 20 hindurchgeführt. Figur 8 zeigt, daß die weitere Folie 10 sauber abgeschnitten ist und daß im Bereich des umlaufenden Randes 20 ein von den Folien 4 und 10 freibleibender Bereich dieses umlaufenden Randes 20 verbleibt. Die Schneideinrichtungen 3 schneiden den umlaufenden Rand 20 nicht ab, sie können dadurch auch nicht von über den Rand 20 vorstehenden Abschnitten zu verpackender Gegenstände, wie beispielsweise Eisstiele oder Knochenteile, beschädigt werden.

Während sich die tiefziehbare Folie 4 eng an die Wandungen des Behälters 6 und an in der Vertiefung des Behälters 6 vorhandene Gegenstände 7 anlegt, verbleibt die weitere Folie 10 in der Höhenebene des umlaufenden Randes 20. Im Bereich des umlaufenden Randes 20 liegen beide Folien 4 und 10 abschnittsweise übereinander. Beide Folien 4, 10 wurden vor ihrem Aufsiegeln auf den Behälter 6 bzw. auf die tiefziehbare Folie 4 zugeschnitten.

## Patentansprüche

1. Verfahren zum gasdichten Verpacken von Gegenstände (7) mit sich eng an die Gegenstände anlegenderFolie (4) unter Einsatz eines Vakuums, wobei die Gegenstände in eine Schale (6) eingelegt werden und zum Verschließen der Schale die tiefziehbare Folie (4) mit der Schale verbunden wird, und wobei für das Ausbilden der Verpackung ei ne Schale mit zumindest einem umlaufenden Rand (20) verwendet wird, die tiefziehbare Folie (4) auf ein Maß des umlaufenden Randes zugeschnitten wird und anschließend auf den umlaufenden Rand gasdicht aufgebracht wird, während eine weitere Folie (10) nach ihrem Aufbringen etwa in der Ebene des umlaufenden Randes (20) verbleibt,
**dadurch gekennzeichnet,**
**daß** während des Aufbringens der tiefziehbaren Folie (4) oder nach diesem Aufbringen die weitere Folie (10) auf das Maß des umlaufenden Randes (20) zugeschnitten wird und anschließend auf den umlaufenden Rand (20) aufgebracht wird.

2. Verfahren nach Anspruch 1, **dadurch gekennzeichnet, dass** die weitere Folie (10) auf den umlaufenden Rand (20) aufgeschweißt wird.

3. Verfahren nach Anspruch 1, **dadurch gekennzeichnet, dass** die weitere Folie im Bereich des umlaufenden Randes (20) auf die tiefziehbare Folie (4) aufgeschweißt wird.

4. Verfahren nach einem der vorhergehenden Ansprüche, **dadurch gekennzeichnet, dass** in den zwischen der tiefziehbaren Folie (4) und der weiteren Folie (10) auszubildenden Zwischenraum ein Schutzgas eingeführt wird.

5. Verfahren nach Anspruch 4, **dadurch gekennzeichnet, dass** als Schutzgas Sauerstoff, Stickstoff oder Kohlendioxid verwendet wird.

6. Verfahren nach einem der Ansprüche 4 oder 5, **dadurch gekennzeichnet, dass** in dem Zwischenraum und im Umgebungsbereich der weiteren Folie (10) auf der der Schale (6) abgekehrten Seite ein Normaldruck ausbildbar ist.

7. Anlage zum gasdichten Verpacken von Gegenständen mit sich eng an die Gegenstände anlegendem Folienmaterial unter Einsatz eines Vakuums, zum Durchführen des Verfahrens nach einem der Ansprüche 1 bis 6, umfassend eine Auflage für zumindest eine Schale und umfassend zumindest ein Siegelwerkzeug für die tiefziehbare Folie und umfassend zumindest eine Schneideinrichtung für die tiefziehbare Folie,
**dadurch gekennzeichnet,**
**dass** sie zumindest ein zweites Siegelwerkzeug für die weitere Folie (10) und zumindest eine zweite Schneideinrichtung (3) für die weitere Folie (10) aufweist.

8. Anlage nach Anspruch 7, **dadurch gekennzeichnet, dass** die zweite Schneideinrichtung (3) Messerklingen umfasst.

9. Anlage nach Anspruch 7 oder 8, **dadurch gekennzeichnet, dass** die zweite Schneideinrichtung (3) einem Siegelwerkzeug (2) für die weitere Folie (10) räumlich zugeordnet ist.

10. Anlage nach Anspruch 9, **dadurch gekennzeichnet, dass** die zweite Schneideinrichtung (3) das Siegelwerkzeug (2) umläuft.

11. Anlage nach einem der Ansprüche 7 bis 10, **dadurch gekennzeichnet, dass** die Auflage für die Schale (6) und/oder das Siegelwerkzeug (2) höhenveränderbar geführt sind.

12. Anlage nach Anspruch 11, **dadurch gekennzeichnet, dass** die Auflage zumindest eine Auflageeinrichtung für den umlaufenden Rand (20) der Schale (6) aufweist.

13. Anlage nach Anspruch 12, **dadurch gekennzeichnet, dass** zwischen den Schalen (6) und der weiteren Folie (10) eine Distanzplatte (5) angeordnet ist, welche auf die Auflageeinrichtung für den umlaufenden Rand (20) auflegbar ist, wobei dabei der umlaufende Rand (20) zumindest abschnittsweise frei bleibt.

14. Anlage nach Anspruch 13, **dadurch gekennzeichnet, dass** in der Distanzplatte (5) zumindest ein mit einem Behälter (6) in Deckungslage bringbarer Durchbruch (23) angeordnet ist.

15. Anlage nach Anspruch 14, **dadurch gekennzeichnet, dass** das Siegelwerkzeug (2) zum Durchbruch (23) in der Distanzplatte (5) korrespondierende Abmessungen hat.

16. Anlage nach Anspruch 15, **dadurch gekennzeichnet, dass** eine dem Siegelwerkzeug (2) zugeordnete Schneideinrichtung (3) eng an einer Kante des Durchbruches (23) der Distanzplatte (5) vorbeiführbar ist.

17. Anlage nach Anspruch 16, **dadurch gekennzeichnet, dass** das Schneidwerkzeug (3) vom Siegelwerkzeug (2) abgekoppelt ist und federnd gelagert ist.

## Claims

1. A method for gas-tight packaging of objects (7), with sheeting (4) lying closely to the objects, under the use of a vacuum, wherein the objects are placed in a shell (6) with the which the deep-drawable sheeting (4) is connected to the shell for the purposes of closing it, and wherein a shell having at least one circumferential edge (20) is used for forming the packaging, the deep-drawable sheeting (4) being cut to the dimension of the circumferential edge and subsequently being applied onto the circumferential edge in a gas-tight manner, while an additional piece of sheeting (10) remains in approximately the plane of the circumferential edge (20) after application,
**characterised in that**
during the application of the deep-drawable sheeting (4) or subsequent to its application, the additional piece of sheeting (10) is cut to the dimension of the circumferential edge (20), subsequent to which it is applied onto the circumferential edge (20).

2. The method as specified in claim 1, **characterised in that** the additional piece of sheeting (10) is welded onto the circumferential edge (20).

3. The method as specified in claim 1, **characterised in that** the additional piece of sheeting (10) is welded onto the deep-drawable sheeting (4) in the region of the circumferential edge (20).

4. The method as specified in any one of the previous claims, **characterised in that** a protective gas is introduced into the intermediate space between the deep-drawable sheeting (4) and the additional piece of sheeting (10).

5. The method as specified in claim 4, **characterised in that** oxygen, nitrogen, or carbon dioxide is used as the protective gas.

6. The method as specified in one of the claims 4 or 5, **characterised in that** a normal pressure can be developed in the intermediate space and in the surrounding area of the additional piece of sheeting (10) on the side facing away from the shell (6).

7. An installation for gas-tight packaging of objects, with sheeting lying closely to the objects, under the use of a vacuum for carrying out the method as specified in one of the claims 1 to 6, comprising a support for at least one shell, and comprising at least one sealing tool for the deep-drawable sheeting, and furthermore comprising at least one cutting device for the deep-drawable sheeting,
**characterised in that**
said installation comprises at least one second sealing tool for the additional piece of sheeting (10) as well as at least one second cutting device (3) for the additional piece of sheeting (10).

8. The installation as specified in claim 7, **characterised in that** the second cutting device (3) comprises knife blades.

9. The installation as specified in claim 7 or claim 8, **characterised in that** the second cutting device (3) is spatially associated with a sealing tool (2) for the additional piece of sheeting (10).

10. The installation as specified in claim 9, **characterised in that** the second cutting device (3) turns the sealing tool (2).

11. The installation as specified in any one of the claims 7 to 10, **characterised in that** the supports for the shell (6) and/or for the sealing tool (2) are directed in a height-an adjustable manner.

12. The installation as specified in claim 11, **characterised in that** the support comprises at least one support device for the circumferential edge (20) of the shell (6).

13. The installation as specified in claim 12, **characterised in that** a distance plate (5) is arranged between the shell (6) and the additional piece of sheeting (10), said distance plate being able to be placed upon the support device for the circumferential edge (20), wherein the circumferential edge (20) remains free at least in sections.

14. The installation as specified in claim 13, **characterised in that** in the distance plate (5) at least one opening (23) is arranged that can be brought to overlap with a container (6).

15. The installation as specified in claim 14, **characterised in that** the sealing tool (2) has dimensions that correspond to the opening (23) in the distance plate (5).

16. The installation as specified in claim 15, **characterised in that** a cutting device (3) associated with the sealing tool (2) can run closely past an edge of the opening (23) of the distance plate (5).

17. The installation as specified in claim 16, **characterised in that** the cutting tool (3) is separate from the sealing tool (2) and is resiliently mounted.

## Revendications

1. Procédé d'emballage étanche aux gaz d'objets (7) avec un film (4) venant reposer étroitement sur les objets en employant un vide, dans lequel les objets sont placés dans une coque (6) et à des fins d'obturation de la coque le film (4) thermoformable est relié à la coque, et dans lequel à des fins de réalisation de l'emballage une coque comportant au moins un bord (20) circonférentiel est utilisée, le film (4) thermoformable est découpé à une proportion du bord circonférentiel et ensuite monté de manière étanche aux gaz sur le bord circonférentiel, alors qu'un film supplémentaire (10) reste après son montage approximativement dans le plan du bord circonférentiel (20),
**caractérisé en ce que**
pendant le montage du film (4) thermoformable ou après le montage de celui-ci, le film supplémentaire (10) est découpé à la dimension du bord circonférentiel (20) et ensuite monté sur le bord circonférentiel (20).

2. Procédé selon la revendication 1, **caractérisé en ce que** le film supplémentaire (10) est soudé sur le bord circonférentiel (20).

3. Procédé selon la revendication 1, **caractérisé en ce que** le film supplémentaire est soudé sur le film thermoformable (4) au niveau du bord circonférentiel (20).

4. Procédé selon une des revendications précédentes, **caractérisé en ce que** dans l'espace intermédiaire réalisé entre le film thermoformable (4) et le film supplémentaire (10), un gaz de protection est injecté.

5. Procédé selon la revendication 4, **caractérisé en ce que** comme gaz de protection on emploie de l'oxygène, de l'azote ou du dioxyde de carbone.

6. Procédé selon une des revendications 4 ou 5, **caractérisé en ce que** dans l'espace intermédiaire et dans la région environnante du film supplémentaire (10) sur le côté opposé à la coque (6), une pression normale peut être établie.

7. Installation d'emballage étanche aux gaz d'objets avec un matériau de film venant reposer étroitement sur les objets en employant un vide, pour mettre en oeuvre le procédé selon une des revendications 1 à 6, comprenant une surface d'appui pour au moins une coque et comprenant au moins un outil de scellement pour le film thermoformable et comprenant au moins un dispositif de découpage pour le film thermoformable,
**caractérisée en ce que**
elle présente au moins un deuxième outil de scellement pour le film supplémentaire (10) et au moins un deuxième dispositif de découpage (3) pour le film supplémentaire (10).

8. Installation selon la revendication 7, **caractérisée en ce que** le deuxième dispositif de découpage (3) comprend des sections de lame.

9. Installation selon la revendication 7 ou 8, **caractérisé en ce que** le deuxième dispositif de découpage (3) est coordonné spatialement à un outil de scellement (2) pour le film supplémentaire (10).

10. Installation selon la revendication 9, **caractérisée en ce que** le deuxième dispositif de découpage (3) fait le tour de la circonférence de l'outil de scellement (2).

11. Installation selon une des revendications 7 à 10, **caractérisée en ce que** la surface d'appui pour la coque (6) et/ou pour l'outil de scellement (2) peut être guidée de manière variable en hauteur.

12. Installation selon la revendication 11, **caractérisée en ce que** la surface d'appui présente au moins un dispositif d'appui pour le bord circonférentiel (20) de la coque (6).

13. Installation selon la revendication 12, **caractérisée en ce qu'**entre les coques (6) et le film supplémentaire (10), une plaque d'écartement (5) est disposée, laquelle peut être posée sur le dispositif d'appui pour le bord circonférentiel (20), dans lequel le bord circonférentiel (20) reste ainsi au moins sur des portions à découvert.

14. Installation selon la revendication 13, **caractérisée en ce que** dans la plaque d'écartement (5), au moins une percée (23) pouvant être amenée en position de recouvrement avec un récipient (6) est disposée.

15. Installation selon la revendication 14, **caractérisée en ce que** l'outil de scellement (2) possède des dimensions correspondant à la percée (23) dans la plaque d'écartement (5).

16. Installation selon la revendication 15, **caractérisée en ce qu'**un dispositif de découpage (3) coordonné à l'outil de scellement (2) peut être avancé étroitement sur une arête de la percée (23) de la plaque d'écartement (5).

17. Installation selon la revendication 16, **caractérisée en ce que** l'outil de découpage (3) est découplé de l'outil de scellement (2) et positionné de manière élastique.
